# EUROPÄISCHE PATENTSCHRIFT

(11) **EP 2 564 574 B1**
(45) Veröffentlichungstag und Bekanntmachung des Hinweises auf die Patenterteilung: **02.08.2017**
(21) Anmeldenummer: 11725705.5
(22) Anmeldetag: 08.06.2011
(51) Int. Cl.: H04W 12/12, H04L 29/06, H04L 12/26, H04L 12/801, H04L 12/815

(54) **VERFAHREN ZUM FILTERN UND VERARBEITEN VON DATEN IN EINEM PAKETVERMITTELTEN KOMMUNIKATIONSNETZ**
METHOD FOR FILTERING AND PROCESSING OF DATA IN A PACKET SWITCHING NETWORK
PROCÉDÉ DE FILTRAGE ET LE TRAITEMENT DE DONNÉES DANS UN RESEAU DE COMMUNICATION PAR PAQUETS

(30) Priorität: 30.06.2010 DE 102010025638
(43) Veröffentlichungstag der Anmeldung: 06.03.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2011/059480
(87) Internationale Veröffentlichungsnummer: WO 2012/000753

(56) Entgegenhaltungen:
- US-A1- 2003 216 144
- US-A1- 2007 025 245
- US-B1- 7 574 202
- Chris Wullems ET AL: "PROXIMITY-BASED NETWORK PACKET FILTERING FOR IEEE 802.11 WIRELESS DEVICES", , 1. Januar 2004 (2004-01-01), XP55003047, IADIS International Conference Applied Computing 2004 Gefunden im Internet: URL:http://www.iadis.net/dl/final_uploads/ 200401L032.pdf [gefunden am 2011-07-19]

## Beschreibung

Die Erfindung betrifft ein Verfahren zum Verarbeiten von Daten in einem paketvermittelten Kommunikationsnetz, insbesondere in einem drahtlosen Kommunikationsnetz, mit einer Mehrzahl von Netzknoten, zwischen denen Datenpakete übermittelt werden. Ferner betrifft die Erfindung ein entsprechendes Kommunikationsnetz sowie einen entsprechenden Netzknoten.

Um Netzknoten in einem paketvermittelten Kommunikationsnetz vor unerwünschten bzw. manipulierten Datenpaketen zu schützen, ist es aus dem Stand der Technik bekannt, Datenpakete in geeigneter Weise zu filtern, beispielsweise mit Hilfe einer sog. Firewall. Eine Firewall analysiert dazu Protokollfelder eines empfangenen Datenpakets und nur dann, wenn die Inhalte der Protokollfelder basierend auf vorbestimmten Kriterien als zugelassen erkannt werden, erfolgt z.B. eine Weiterleitung der Datenpakete.

Aus dem Stand der Technik ist es ferner bekannt, in einem paketvermittelten Datennetz übertragene Datenpakte kryptographisch zu schützen, z.B. indem die Nutzdaten in den Datenpaketen mit einem geeigneten Schlüssel verschlüsselt werden. Dabei kann die Unversehrtheit der Datenpakete bzw. Header-Felder durch eine kryptographische Prüfsumme unter Verwendung des kryptographischen Schlüssels geschützt werden, wobei nur Datenpakete mit gültiger Prüfsumme weiterbearbeitet werden.

Aus dem Stand der Technik sind ferner sog. Intrusion-Detection-Systeme bekannt, welche beispielsweise in WLAN-Systemen eingesetzt werden, um die drahtlose Kommunikation zu überwachen und unerwünschte Kommunikation zu identifizieren.

Im Rahmen einer Kommunikation in einem paketvermittelten Kommunikationsnetz werden die einzelnen Netzknoten in der Regel durch entsprechende Adressen, wie z.B. die MAC-Adresse in der Schicht 2 bzw. die IP-Adresse in der Schicht 3 des OSI-Referenzmodells, identifiziert. Es sind jedoch auch Ansätze bekannt, bei denen in einem WLAN-Netz basierend auf einem sog. WLAN-Fingerprinting Sendeknoten identifiziert werden. Dabei kann ein Sendeknoten aufgrund gemessener Eigenschaften des physikalischen Übertragungssignals des Sendeknotens identifiziert werden. Insbesondere wird die beim Einschalten eines Sendeknotens auftretende Transiente ausgewertet. Der Messaufwand zur Analyse der Transiente ist jedoch erheblich und eine zuverlässige Identifikation eines Sendeknotens kann nicht immer erreicht werden.

Die bekannten Verfahren zur Filterung bzw. zum Schutz von Datenpaketen beruhen auf dem Prinzip, dass die in den Datenpaketen enthaltenen Informationen analysiert bzw. verschlüsselt werden. In bestimmten Szenarien ist es jedoch wünschenswert, eine unbefugte Manipulation auch anhand anderer Kriterien als den in den Datenpaketen enthaltenen Informationen zu detektieren, beispielsweise wenn im Rahmen einer kryptographisch nicht gesicherten Kommunikation kryptographische Schlüssel übermittelt werden.

Die Druckschrift US 2007/025245 A1 offenbart ein Verfahren zur Identifikation von drahtlosen Transmittern in einem drahtlosen Netzwerk, wobei Charakteristika des Übertragungssignals zur Erzeugung eines Fingerprints des entsprechenden Transmitters verarbeitet werden.

In dem Dokument Chris Wullems et al.: "Proximity-Based Network Packet Filtering for IEEE 802.11 Wireless Devices", 1. Januar 2004, IADIS International Conference Applied Computing 2004, wird die Filterung von Datenpaketen für drahtlose Übertragungsgeräte unter Berücksichtigung der Nähe der Geräte zu einem Überwachungspunkt beschrieben.

In dem Dokument US 2003/216144 A1 ist ein Verfahren zur Bestimmung des physikalischen Orts eines Geräts in einem Netzwerk über gemessene Signalcharakteristika offenbart.

Die Druckschrift US 7 574 202 B1 offenbart ein Verfahren zur Verwaltung eines LAN-Netzes, welches eine Vielzahl von privaten Netzen umfasst, welche mit einem drahtlosen Netz aus einer Vielzahl von drahtlosen Zugangspunkten logisch verknüpft sind. Im Rahmen des Verfahrens werden auch physikalische Übertragungsparameter, wie z.B. die Signalstärke und das Signal-Rausch-Verhältnis, gemessen.

Aufgabe der Erfindung ist es, ein Verfahren zum Verarbeiten von Daten in einem paketvermittelten Kommunikationsnetz zu schaffen, bei dem Datenpakete nicht ausschließlich basierend auf den in den Datenpaketen enthaltenen Informationen analysiert werden.

Diese Aufgabe wird durch das Verfahren gemäß Patentanspruch 1 bzw. das paketvermittelte Kommunikationsnetz gemäß Patentanspruch 16 bzw. dem Netzknoten gemäß Patentanspruch 17 gelöst. Weiterbildungen der Erfindung sind in den abhängigen Ansprüchen definiert.

Das erfindungsgemäße Verfahren dient zum Verarbeiten von Daten in einem paketvermittelten Kommunikationsnetz, insbesondere in einem drahtlosen Kommunikationsnetz, mit einer Mehrzahl von Netzknoten, zwischen denen Datenpakete übermittelt werden. Im Rahmen des Verfahrens werden aus einem oder mehreren Datenpakten, die in einem oder mehreren Netzknoten des Kommunikationsnetzes empfangen werden, die darin enthaltenen Informationen zumindest teilweise extrahiert. Ferner werden ein oder mehrere physikalische Übertragungsparameter des oder der empfangenen Datenpakete ermittelt, wobei das oder die physikalischen Übertragungsparameter eine oder mehrere Eigenschaften der physikalischen Übertragung des oder der empfangenen Datenpakete spezifizieren oder davon abhängen. Der Begriff der physikalischen Übertragungsparameter ist im Sinne der Erfindung weit zu verstehen und kann beliebige, im Zusammenhang mit der Übertragung der Datenpakete stehende Parameter, insbesondere auch Parameter betreffend das Aussenden und betreffend den Empfang der Datenpakete umfassen, wobei die physikalischen Übertragungsparameter auch derart ausgestaltet sein können, dass sie sich nur mittelbar auf Eigenschaften der physikalischen Übertragung beziehen.

Im Rahmen des erfindungsgemäßen Verfahrens werden das oder die empfangenen Datenpakete basierend auf einem Regelsatz (d.h. der eine oder mehrere Regeln umfasst) gefiltert und in Abhängigkeit von der Filterung weiterverarbeitet, wobei der Regelsatz zumindest einen Teil der extrahierten Informationen und zumindest einen Teil des oder der ermittelten physikalischen Übertragungsparameter des oder der empfangenen Datenpakete berücksichtigt. Der Begriff der Filterung ist im Sinne der Erfindung weit zu verstehen und umfasst insbesondere jede Art von geeigneter Spezifikation bzw. Kategorisierung von Datenpaketen, wobei in Abhängigkeit von der Spezifikation bzw. Kategorisierung eine entsprechende Weiterverarbeitung der Datenpakete durchgeführt wird.

Gemäß dem erfindungsgemäßen Verfahren umfassen die in einem oder mehreren Netzknoten empfangenen Datenpakete im Rahmen eines vorbestimmten Konfigurationsvorgangs übermittelte Konfigurations-Datenpakete, wobei durch den vorbestimmten Konfigurationsvorgang ein oder mehrere Netzknoten konfiguriert werden und dabei insbesondere kryptographische Informationen ausgetauscht werden. Ein bevorzugter Anwendungsfall des erfindungsgemäßen Verfahrens ist somit die Durchführung eines sog. Bootstrapping-Vorgangs, bei dem initiale Konfigurationsdaten, die bei einer nachfolgenden Kommunikation zwischen Netzknoten benötigt werden, auf die Netzknoten geladen werden. Es wird dabei basierend auf einem oder mehreren ermittelten physikalischen Übertragungsparametern des oder der empfangenen Konfigurations-Datenpakete ein Konfidenzmaß ermittelt, welches die Konfidenz bzw. das Vertrauen wiedergibt, dass das oder die empfangenen Datenpakete zu dem vorbestimmten Konfigurationsvorgang gehören, d.h. dass die Konfigurations-Datenpakete insbesondere nicht manipuliert sind bzw. nicht von einem unbefugten Angreifer in das Kommunikationsnetz eingespeist werden. Im Rahmen dieser Variante der Erfindung wird der Konfigurationsvorgang abgebrochen oder unterbrochen, wenn das Konfidenzmaß eine Konfidenz repräsentiert, welche kleiner oder kleiner gleich einer vorgegebenen Mindestkonfidenz ist. Über eine entsprechende Information, welche aus dem Datenpaket extrahiert wird, kann gemäß dieser Variante der Erfindung festgestellt werden, ob es sich bei einem Datenpaket um ein Konfigurations-Datenpaket handelt.

Im erfindungsgemäßen Verfahren wird ein vorbestimmter Konfigurationsvorgang durch ein oder mehrere erste Konfigurations-Datenpakete eingeleitet, welche mit einer ersten Signalstärke von einem oder mehreren Netzknoten ausgesendet werden, wobei Netzknoten, welche diese ersten Konfigurations-Datenpakete empfangen, keinen weiteren Konfigurationsvorgang starten. Auf diese Weise wird sichergestellt, dass zu einem Zeitpunkt immer nur ein einziger Konfigurationsvorgang durchgeführt wird. Ferner wird der vorbestimmte Konfigurationsvorgang mit einem oder mehreren zweiten Konfigurations-Datenpaketen durchgeführt, welche mit einer zweiten Signalstärke von einem oder mehreren Netzknoten ausgesendet werden, welche geringer als die erste Signalstärke ist. Hierdurch wird sichergestellt, dass die im Rahmen der Konfiguration übermittelten Konfigurationsparameter, welche insbesondere auch kryptographische Schlüssel enthalten können, nur in einem kleinen Segment eines drahtlosen Kommunikationsnetzes empfangen werden können, wodurch die Möglichkeit von sicherheitskritischen Angriffen eingeschränkt wird.

Im erfindungsgemäßen Verfahren werden neben in den Datenpaketen enthaltene Informationen auch physikalische Übertragungsparameter bei der Filterung von Datenpaketen verwendet werden. Im Unterschied zu dem eingangs erläuterten WLAN-Fingerprinting wird dabei nicht versucht, einen Netzknoten aufgrund seiner Übertragungseigenschaften zu identifizieren, sondern Datenpakete werden unter Verwendung von physikalischen Übertragungsparametern gefiltert, um beispielsweise zu ermitteln, ob die Übertragungsparameter mehrerer aufeinander folgender Datenpakete plausibel sind. Beispielsweise kann basierend auf einer Plausibilitätsprüfung ermittelt werden, ob die empfangenen Datenpakete von ein und demselben Sendeknoten stammen. Dies kann insbesondere daraus abgeleitet werden, ob bestimmte Übertragungsparameter von aufeinander folgenden Datenpaketen konstant bleiben oder stärkere Abweichungen aufweisen. Sollten solche stärkeren Abweichungen auftreten, können die empfangenen Datenpakete beispielsweise verworfen werden. Ebenso kann bei stärkeren Abweichungen z.B. ein automatischer Einrichtvorgang zur Konfiguration eines kryptographischen Schlüssels abgebrochen werden, sofern über die Datenpakete ein solcher Einrichtvorgang durchgeführt wird.

In einer bevorzugten Ausführungsform des erfindungsgemäßen Verfahrens umfassen die aus den Datenpaketen extrahierten Informationen eine oder mehrere der folgenden Informationen:
- eine oder mehrere Adressen und/oder Portnummern eines Quell-Netzknotens, von dem das oder die empfangenen Datenpakete stammen, und/oder eine oder mehrere Adressen und/oder Portnummern eines Ziel-Netzknotens, für den das oder die empfangenen Datenpakete bestimmt sind;
- ein oder mehrere, für die Übertragung des oder der empfangenen Datenpakete verwendeten Übertragungsprotokolle.

Die extrahierten Informationen stammen insbesondere aus der Schicht 2 und/oder aus der Schicht 3 und/oder aus einer höheren, über der Schicht 3 liegenden Schicht des sog. OSI-Referenzmodells. Beispielsweise können die Informationen die entsprechenden MAC-Adressen auf der Schicht 2 bzw. die entsprechenden IP-Adressen auf der Schicht 3 umfassen, ebenso wie entsprechende Übertragungsprotokolle, wie z.B. TCP, UDP und dergleichen. Im Sinne der Erfindung betrifft ein Datenpaket dabei auch einen Datenframe auf der Schicht 2. Das OSI-Referenzmodell ist dem Fachmann hinlänglich bekannt und beschreibt eine paketvermittelte Kommunikation basierend auf einem Schichtmodell.

In einer weiteren, besonders bevorzugten Ausführungsform umfassen das oder die physikalischen Übertragungsparameter, welche im Rahmen des erfindungsgemäßen Verfahrens ermittelt werden, einen oder mehrere der folgenden Parameter:
- die Signalstärke und/oder das Signal-Rausch-Verhältnis, mit denen das oder die Datenpakete empfangen werden;
- einen oder mehrere Parameter einer adaptiv an die Übertragung der empfangenen Datenpakete angepassten Demodulationseinheit, mit der das oder die empfangenen Datenpakete demoduliert werden, insbesondere einen oder mehrere Parameter einer Demodulationseinheit in einem MIMO- und/oder RAKE-Empfänger;
- das oder die Demodulationsverfahren, welche für das oder die empfangenen Datenpakete genutzt werden;
- die Richtcharakteristik des oder der empfangenen Datenpakete;
- die Übertragungsgeschwindigkeit des oder der empfangenen Datenpakete;
- ein Fehlermaß, welches die bei der Übertragung des oder der empfangenen Datenpakete aufgetretenen Fehler spezifiziert.

Der oben erwähnte MIMO-Empfänger ist ein hinlänglich aus dem Stand der Technik bekannter Empfänger, der basierend auf den Empfangssignalen von mehreren Antennen das eingehende Hochfrequenzsignal, in dem die Datenpakete enthalten sind, demoduliert. Im Rahmen der Demodulation werden vorbestimmte Parameter verwendet, welche davon abhängen, aus welcher Richtung die Signale empfangen werden. Ebenso ist der oben erwähnte RAKE-Empfänger aus dem Stand der Technik bekannt. In diesem Empfänger werden die Parameter der Demodulation geeignet eingestellt, um Mehrwegeausbreitung bei der Übertragung der Signale zu berücksichtigen.

Das oben erwähnte Fehlermaß, welches die bei der Übertragung des oder der empfangenen Datenpakete aufgetretenen Fehler spezifiziert, kann beispielsweise im Rahmen einer Vorwärtsfehlerkorrektur bestimmt werden und dabei insbesondere die Anzahl an korrigierten Bitfehlern angeben.

In einer weiteren, besonders bevorzugten Ausführungsform des erfindungsgemäßen Verfahrens werden das oder die empfangenen Datenpakete in Abhängigkeit von der Filterung auf eine oder mehrere der folgenden Arten weiterverarbeitet:
- das oder die empfangenen Datenpakete werden verworfen;
- das oder die empfangenen Datenpakete werden an einen oder mehrere Netzknoten weitergeleitet;
- das oder die empfangenen Datenpakete werden klassifiziert, beispielsweise geeigneten QoS-Klassen zugeordnet, wobei die Klassen bei der Weiterverarbeitung der Datenpakete z.B. derart berücksichtigt werden, dass eine Priorität für die Weiterverarbeitung der Datenpakete festgelegt wird.

Die Weiterverarbeitung von Datenpaketen kann gegebenenfalls auch darin bestehen, dass Informationen zu dem oder den empfangenen Datenpaketen einem Benutzer über eine Benutzerschnittstelle ausgegeben werden, woraufhin der Benutzer gegebenenfalls entscheiden kann, wie mit den Datenpaketen weiter verfahren werden soll, z.B. ob die Datenpakete an weitere Netzknoten weitergeleitet werden sollen oder verworfen werden sollen.

In einer weiteren, besonders bevorzugten Ausführungsform des erfindungsgemäßen Verfahrens werden durch die Filterung das oder die empfangenen Datenpakete in Abhängigkeit von extrahierten Informationen zunächst Kategorien zugeordnet und anschließend wird überprüft, ob ein oder mehrere ermittelte physikalische Übertragungsparameter des oder der empfangenen Datenpakete ein oder mehrere Referenzkriterien der jeweiligen Kategorie erfüllen, welcher das oder die Datenpakete zugeordnet sind.

In einer besonders bevorzugten Ausführungsform wird basierend auf dem oder den Referenzkriterien ein Maß der Veränderung von einem oder mehreren physikalischen Übertragungsparametern für mehrere empfangene Datenpakete ausgewertet, wobei das oder die Referenzkriterien insbesondere dann erfüllt sind, wenn das Maß der Veränderung kleiner oder kleiner gleich einem vorgegebenen Schwellwert ist, wobei das oder die empfangenen Datenpakete, welche das oder die Referenzkriterien nicht erfüllen, vorzugsweise verworfen werden. Auf diese Weise kann über die Filterung z.B. bestimmt werden, ob die empfangenen Datenpakete immer vom gleichen sendenden Knoten stammen. Ist dies nicht der Fall, besteht die Gefahr der Manipulation der Datenpakete, woraufhin die Datenpakete in einer bevorzugten Variante der Erfindung verworfen werden. Das Maß der Veränderung der physikalischen Übertragungsparameter kann beispielsweise basierend auf der aus den Datenpaketen ermittelten Varianz oder Standardabweichung der physikalischen Übertragungsparameter definiert sein bzw. der Varianz oder der Standardabweichung entsprechen. Ebenso kann das Maß der Veränderung die maximale Abweichung des oder der physikalischen Übertragungsparameter von dem Mittelwert der physikalischen Übertragungsparameter der empfangenen Datenpakete darstellen, wobei gemäß den Referenzkriterien ein Schwellwert für die maximale Abweichung festgelegt wird, wobei im Falle, dass die maximale Abweichung oberhalb des Schwellwerts liegt, die Datenpakete z.B. verworfen werden.

In einer weiteren Variante des erfindungsgemäßen Verfahrens können das oder die Referenzkriterien fest sein, d.h. sich während der Durchführung des Verfahrens nicht verändern. Es besteht jedoch auch die Möglichkeit, dass die Referenzkriterien an einen oder mehrere ermittelte physikalische Übertragungsparameter des oder der empfangenen Datenpakete angepasst sind.

Das erfindungsgemäße Verfahren kann in dem Kommunikationsnetz an verschiedenen Stellen implementiert werden. In einer Variante wird das erfindungsgemäße Verfahren zumindest teilweise in dem oder den Netzknoten durchgeführt, in denen das oder die Datenpakete empfangen werden. Ebenso besteht die Möglichkeit, dass das Verfahren für Datenpakete, welche in mehreren vorbestimmten Netzknoten empfangen werden, zumindest teilweise in einem zentralen Netzknoten ausgeführt wird, der den mehreren vorbestimmten Netzknoten zugeordnet ist. Der zentrale Netzknoten kann dabei ein anderer Netzknoten als die vorbestimmten Netzknoten sein. Ebenso besteht die Möglichkeit, dass der zentrale Netzknoten einer der Netzknoten aus der Menge der vorbestimmten Netzknoten ist.

In einer besonders bevorzugten Ausführungsform repräsentiert das Konfidenzmaß eine umso höhere Konfidenz, je geringer die Veränderung des einen oder der mehreren physikalischen Übertragungsparameter für mehrere empfangene Datenpakete ist. Das heißt, die Konfidenz ist umso höher, je größer die Wahrscheinlichkeit ist, dass die Konfigurations-Datenpakete immer vom gleichen Netzknoten ausgesendet werden.

Im Falle der Unterbrechung eines Konfigurationsvorgangs wird in einer Variante der Erfindung einem Benutzer das Konfidenzmaß über eine Benutzerschnittstelle ausgegeben, wobei der Benutzer die Fortsetzung oder den Abbruch des Konfigurationsvorgangs über die Benutzerschnittstelle spezifizieren kann. In einer weiteren Ausgestaltung werden das oder die empfangenen Konfigurations-Datenpakete nur dann dem vorbestimmten Konfigurationsvorgang zugeordnet, wenn der eine oder die mehreren physikalischen Übertragungsparameter, insbesondere die Signalstärke, des oder der empfangenen Konfigurations-Datenpakete innerhalb eines oder mehrerer vorbestimmter Wertebereiche liegt. Basierend auf dieser Ausführungsform kann dabei in geeigneter Weise eine (weitere) Codierung der Konfigurations-Datenpakete unter Verwendung entsprechend festgelegter Wertebereiche für die physikalischen Übertragungsparameter erreicht werden.

Das soeben beschriebene Verfahren kann in beliebigen Arten von Kommunikationsnetzen eingesetzt werden. In einer besonders bevorzugten Ausführungsform wird das Verfahren in einem Kommunikationsnetz einer Automatisierungsanlage verwendet, in welcher Fertigungs- bzw. Produktionsabläufe mit Hilfe des Kommunikationsnetzes ausgeführt und insbesondere gesteuert bzw. überwacht werden.

Neben dem oben beschriebenen Verfahren betrifft die Erfindung ferner ein paketvermitteltes Kommunikationsnetz, insbesondere ein drahtloses Kommunikationsnetz, mit einer Mehrzahl von Netzknoten, zwischen denen im Betrieb des Kommunikationsnetzes Datenpakete übermittelt werden, wobei das Kommunikationsnetz derart ausgestaltet ist, dass in dem Kommunikationsnetz das erfindungsgemäße Verfahren bzw. eine oder mehrere der oben beschriebenen Varianten des erfindungsgemäßen Verfahrens durchführbar sind.

Die Erfindung umfasst darüber hinaus einen Netzknoten zur Verwendung in einem erfindungsgemäßen paketvermittelten Kommunikationsnetz. Der Netzknoten beinhaltet dabei ein erstes Mittel, mit dem im Betrieb des Netzknotens aus einem oder mehreren Datenpaketen, die in einem oder mehreren Netzknoten des Kommunikationsnetzes empfangen werden, die darin enthaltenen Informationen zumindest teilweise extrahiert werden. Ferner ist ein zweites Mittel vorgesehen, mit dem im Betrieb des Netzknotens ein oder mehrere physikalische Übertragungsparameter des oder der empfangenen Datenpakete ermittelt werden, wobei das oder die physikalischen Übertragungsparameter eine oder mehrere Eigenschaften der physikalischen Übertragung des oder der empfangenen Datenpakete spezifizieren oder davon abhängen. Darüber hinaus ist ein drittes Mittel vorgesehen, mit dem im Betrieb des Netzknotens das oder die empfangenen Datenpakete basierend auf einem Regelsatz, welcher zumindest einen Teil der extrahierten Informationen und zumindest einen Teil des oder der physikalischen Übertragungsparameter berücksichtigt, gefiltert werden und in Abhängigkeit von der Filterung weiterverarbeitet werden, wobei die in dem Netzknoten empfangenen Datenpakete im Rahmen eines vorbestimmten Konfigurationsvorgangs übermittelte Konfigurations-Datenpakete umfassen, wobei durch den vorbestimmten Konfigurationsvorgang der Netzknoten konfiguriert wird, wobei basierend auf einem oder mehreren ermittelten physikalischen Übertragungsparametern des oder der empfangenen Konfigurations-Datenpakete ein Konfidenzmaß ermittelt wird, welches die Konfidenz wiedergibt, dass das oder die empfangenen Konfigurations-Datenpakete zu dem vorbestimmten Konfigurationsvorgang gehören, wobei der Konfigurationsvorgang abgebrochen oder unterbrochen wird, wenn das Konfidenzmaß eine Konfidenz repräsentiert, welche kleiner oder kleiner gleich einer vorgegebenen Mindestkonfidenz ist. Dabei wird ein vorbestimmter Konfigurationsvorgang durch ein oder mehrere erste Konfigurations-Datenpakete eingeleitet, welche mit einer ersten Signalstärke von einem oder mehreren Netzknoten ausgesendet werden, wobei der Netzknoten bei Empfang dieser ersten Konfigurations-Datenpakete keinen weiteren Konfigurationsvorgang startet. Ferner wird der vorbestimmte Konfigurationsvorgang mit einem oder mehreren zweiten Konfigurations-Datenpaketen durchgeführt, welche mit einer zweiten Signalstärke von einem oder mehreren Netzknoten ausgesendet werden, welche geringer als die erste Signalstärke ist.

Ausführungsbeispiele der Erfindung werden nachfolgend anhand der beigefügten Figuren detailliert beschrieben.

Es zeigen:
- Fig. 1 bis Fig. 5: verschiedene Topologien von Netzwerken, in denen das erfindungsgemäße Verfahren eingesetzt werden kann;
- Fig. 6: ein Ablaufdiagramm, welches die in einer Ausführungsform des erfindungsgemäßen Verfahrens durchgeführten Schritte verdeutlicht; und
- Fig. 7: den Aufbau eines Netzknotens, der die Filterung und Verarbeitung von Datenpaketen gemäß einer Ausführungsform der Erfindung durchführt.

Die nachfolgend beschriebenen Ausführungsformen des erfindungsgemäßen Verfahrens beruhen darauf, dass physikalische Übertragungsparameter betreffend die in einem oder mehreren Netzknoten eines Kommunikationsnetzes empfangenen Datenpakete ermittelt werden, wobei diese Parameter bei einer Filterung und Weiterverarbeitung der Datenpakete mit berücksichtigt werden. Dabei gehören die im Folgenden erläuterten Varianten des Verfahrens nur dann zur Erfindung, wenn mit dem Verfahren auch das weiter unten beschriebene Bootstrapping durchführbar ist. Bevor die Erfindung im Detail beschrieben wird, wird zunächst dargelegt, in welchen Arten von Netzwerken das erfindungsgemäße Verfahren eingesetzt werden kann. Alle im Folgenden beschriebenen Netzwerke betreffen dabei paketvermittelte Netzwerke, welche basierend auf den verschiedenen Schichten des OSI-Referenzmodells Frames bzw. Datenpakete übertragen, wobei der Begriff des Frames, der insbesondere auf der Schicht 2 des OSI-Referenzmodells eingesetzt wird, eine Ausführungsform eines Datenpakets im Sinne der Erfindung darstellt.

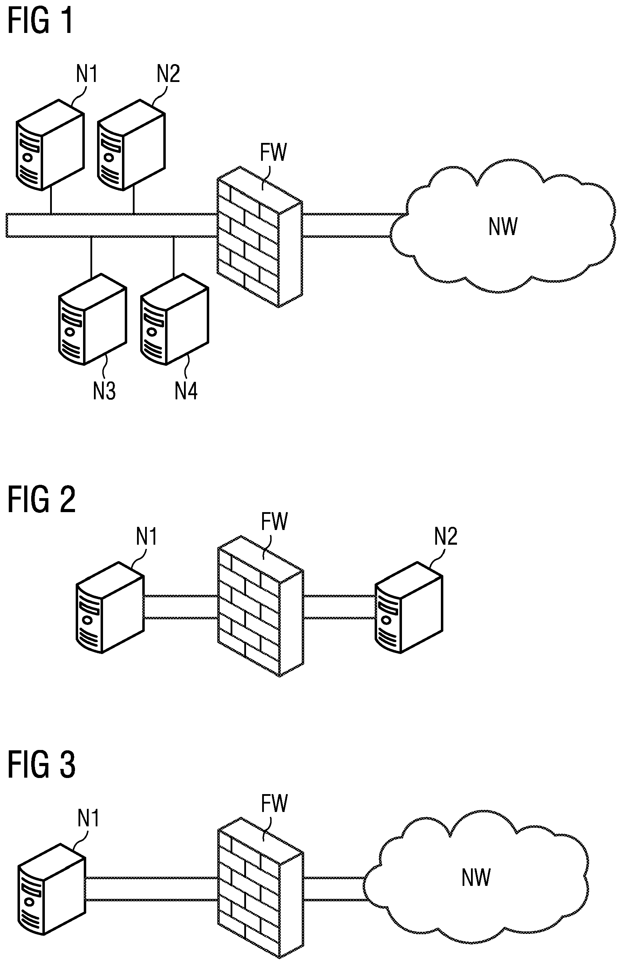

Fig. 1 zeigt eine erste Variante eines drahtgebundenen Kommunikationsnetzes umfassend Netzknoten N1, N2, N3, N4 sowie eine sog. Firewall FW. Die Firewall stellt im Sinne der Erfindung dabei auch einen Netzknoten in dem Datennetz dar und filtert Datenpakete, welche aus einem externen Netz NW an der Firewall ankommen bzw. aus dem Kommunikationsnetz an das externe Netz NW weitergeleitet werden sollen. In der Ausführungsform der Fig. 1 erfolgt die erfindungsgemäße Filterung und Weiterverarbeitung von Datenpaketen basierend auf einem Paketfilter, der in der Firewall FW integriert ist und welcher abhängig von den Übertragungsparametern der empfangenen Datenpakete, wie z.B. dem Signalpegel oder den verwendeten Übertragungsverfahren, entscheidet, ob ein Datenpaket weitergeleitet wird.

Fig. 2 zeigt einen Sonderfall des Netzwerks der Fig. 1, bei dem die erfindungsgemäße Filterfunktion lediglich zwischen zwei Netzknoten N1 und N2 in der Form entsprechender Rechner realisiert ist, welche über eine Punkt-zu-Punkt-Verbindung miteinander Daten austauschen. Die Filterfunktion ist dabei wiederum in einer entsprechenden Firewall FW zwischen den Rechnern N1 und N2 integriert.

Fig. 3 zeigt einen weiteren Sonderfall eines Netzwerks der Fig. 1, bei dem die entsprechende Filterfunktion in einer sog. Personal Firewall FW vorgesehen ist, bei der ein einzelner Netzknoten N1 über die Firewall mit einem Netzwerk NW kommuniziert. Dabei besteht die Möglichkeit, dass die Firewall keinen separaten Netzknoten bildet, sondern ein integraler Bestandteil des Netzknotens N1 ist.

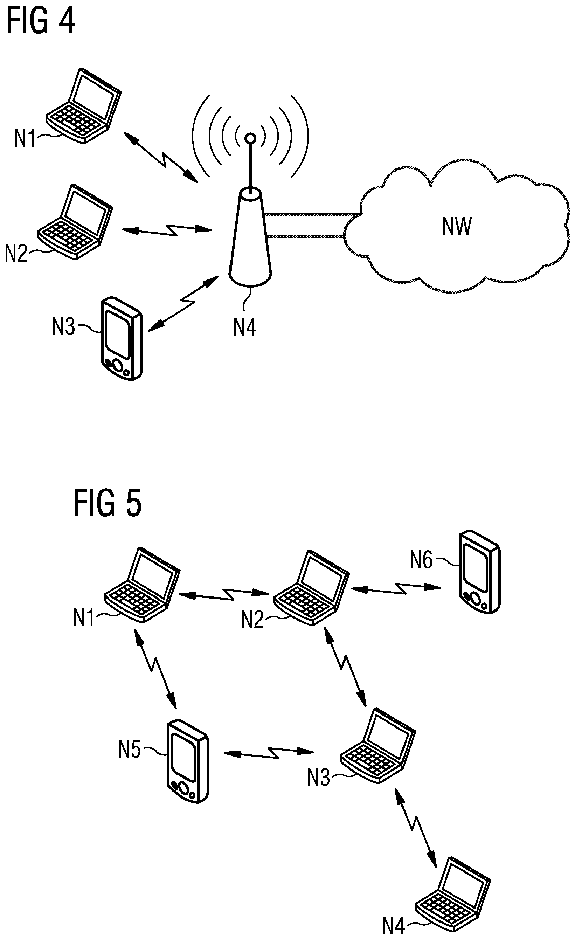

Fig. 4 zeigt eine weitere Ausführungsform eines Netzwerks, in dem das erfindungsgemäße Verfahren implementiert werden kann. Das Netzwerk ist nunmehr ein drahtloses Kommunikationsnetz, beispielsweise basierend auf WLAN, bei dem drei Netzknoten N1, N2 und N3 in der Form entsprechender Endgeräte drahtlos mit einem weiteren Netzknoten N4 kommunizieren, der den Zugangsknoten (englisch: Access Point) für das WLAN-Netz darstellt. Über diesen Zugangsknoten N4 erfolgt eine Verbindung der Netzknoten N1 bis N3 mit einem externen Netz NW. In dem Szenario der Fig. 4 handelt es sich bei den Geräten N1 und N2 um Laptops, wohingegen das Endgerät N3 ein PDA (PDA = Personal Digital Assistent) ist. In dem Szenario der Fig. 4 wird die erfindungsgemäße Filterfunktion, welche Übertragungsparameter der Datenpakete berücksichtigt, in dem Zugangsknoten N4 integriert.

Fig. 5 zeigt einen weiteren Typ eines Netzwerks, in dem eine Filterfunktion basierend auf dem erfindungsgemäßen Verfahren dezentral in den einzelnen Netzknoten integriert ist. Das Netz der Fig. 5 ist dabei ein drahtloses und dezentrales Multi-Hop-Netz, bei dem die einzelnen Netzknoten N1, N2, ..., N6 über ein Mesh-Netz (z.B. WLAN-Mesh-Netzwerk oder ZigBee-Sensornetzwerk) untereinander verbunden sind. Die Netzknoten sind wiederum entsprechende Endgeräte mit drahtloser Kommunikationsschnittstelle, wobei die Netzknoten N1 bis N4 als Laptops wiedergegeben sind und die Netzknoten N5 und N6 PDAs darstellen. In dem Szenario der Fig. 5 ist die erfindungsgemäße Filterfunktion in jedem der einzelnen Engeräte integriert, d.h. es gibt keinen vorbestimmten Netzknoten, der für mehrere Netzknoten die Filterung der Daten übernimmt.

Basierend auf den obigen Netzwerktopologien sind Ausführungsformen der Erfindung realisierbar, bei denen die Übertragungsparameter von Datenpaketen, welche parallel in mehreren Netzknoten empfangen werden, bei der Filterung berücksichtigt werden. Wird ein Datenpaket beispielsweise von einem ersten Netzknoten empfangen, so kann ein anderer, zweiter Netzknoten, der das Datenpaket ebenfalls empfängt, die bei ihm ermittelten Übertragungsparameter der Datenpakete an den ersten Netzknoten übertragen. Dieser erste Netzknoten kann dann basierend auf den von ihm selbst ermittelten Übertragungsparametern sowie den Übertragungsparametern des zweiten Netzknotens eine Entscheidung treffen, wie das bei ihm empfangene Datenpaket weiterzuverarbeiten ist.

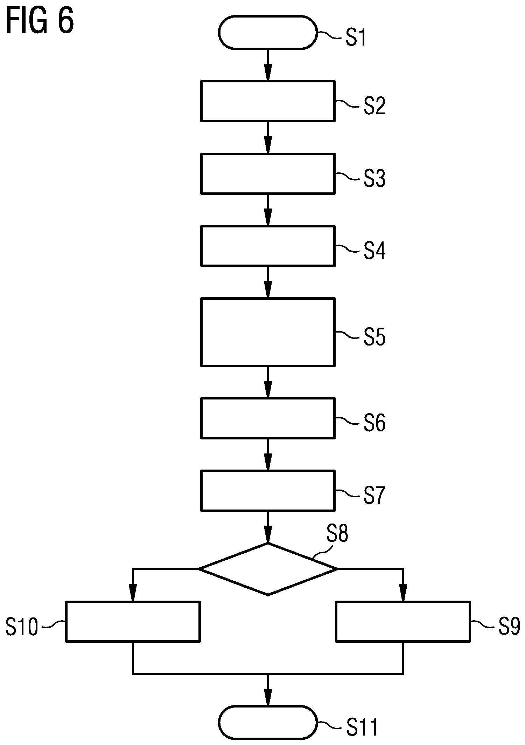

Nachfolgend wird eine Ausführungsform des erfindungsgemäßen Verfahrens anhand des Ablaufdiagramms der Fig. 6 beschrieben, wobei davon ausgegangen wird, dass in dieser Variante die erfindungsgemäßen Schritte in einem einzelnen Netzknoten, z.B. einer Firewall, durchgeführt werden. Durch Schritt S1 wird in Fig. 6 dabei der Start des Verfahrens spezifiziert. Im Rahmen des Verfahrens werden in dem entsprechenden Netzknoten Datenpakete empfangen, wie durch den Schritt S2 angedeutet ist. Für die empfangenen Datenpakete werden in Schritt S3 Empfangsparameter in der Form physikalischer Übertragungsparameter ermittelt, welche Eigenschaften der physikalischen Übertragung der Datenpakete spezifizieren bzw. von diesen Eigenschaften abhängen. Diese Empfangsparameter stellen somit Informationen dar, welche nicht in den Datenpaketen selbst enthalten sind, sondern auf andere Weise, z.B. über geeignete Messungen, ermittelt werden. Neben der Bestimmung der physikalischen Übertragungsparameter werden in Schritt S4 die Datenpakete ferner in an sich bekannter Weise decodiert, um die darin enthaltenen Informationen zu extrahieren.

In Schritt S5 werden schließlich die jeweiligen decodierten Datenpakete und die den jeweiligen Datenpaketen zugeordneten physikalischen Übertragungsparameter gespeichert. Aus den decodierten Informationen der Datenpakete werden anschließend diejenigen Informationen in Schritt S6 extrahiert, welche im Rahmen der nachfolgenden Filterung der Datenpakete relevant sind. Die extrahierten Informationen umfassen dabei insbesondere Header-Felder der Datenpakete, wie Sende-MAC-Adresse, Empfangs-MAC-Adresse, Sende-IP-Adresse, Empfangs-IP-Adresse, das verwendete Übertragungsprotokoll (z.B. TCP oder UDP), die Portnummer des Sendeknotens bzw. die Portnummer des Empfangsknotens und dergleichen. Die extrahierten Informationen werden zusammen mit den physikalischen Übertragungsparametern schließlich in Schritt S7 basierend auf einem Regelsatz (englisch: Policy) gefiltert. Erfindungswesentlich ist dabei, dass in dem Regelsatz nicht nur decodierte Informationen der Datenpakete, sondern auch physikalische Übertragungsparameter der Datenpakete berücksichtigt werden. Der Regelsatz legt dabei in geeigneter Weise fest, unter welchen Kriterien ein Datenpaket gemäß den decodierten Informationen und den physikalischen Übertragungsparametern als ein zugelassenes bzw. nicht zugelassenes Datenpaket eingestuft wird.

Schritt S8 in Fig. 6 verdeutlicht die Überprüfung, ob gemäß dem Regelsatz ein Datenpaket zugelassen wird (Zweig Y) oder nicht zugelassen wird (Zweig N). Wird ein Datenpaket zugelassen, so wird es gemäß Schritt S9 bearbeitet, was insbesondere bedeutet, dass das Datenpaket an einen weiteren Netzknoten weitergeleitet wird. Ist das entsprechende Datenpaket nicht zugelassen, so wird das Datenpaket gemäß Schritt S10 verworfen und nicht an weitere Netzknoten weitergeleitet. Durch Schritt S11 wird in Fig. 6 dabei das Ende des Verfahrens angedeutet.

Der oben erwähnte Regelsatz kann z.B. als Liste von Regeln ausgestaltet sein, wobei im Folgenden zwei Beispiele von Regeln wiedergegeben sind, deren Syntax an die Syntax von Routern der Firma Cisco^{®} angelehnt sind:
permit 0.0.0.0 192.15.14.1 TCP src >= 1024 dst = 25 RSS >= 10 SNR < 5 deny 0.0.0.0 192.15.14.1 TCP src = 25 dst >= 1024 RSS < 5

Durch die mit "permit" eingeleitete Regel wird spezifiziert, unter welchen Bedingungen ein Datenpaket zugelassen wird. Die auf "permit" folgenden Parameter bezeichnen dabei eine Quell-IP-Adresse 0.0.0.0, eine Ziel-IP-Adresse 192.15.14.1 sowie das Übertragungsprotokoll TCP. Ferner wird spezifiziert, dass eine Portnummer src des Quellknotens größer gleich 1024 ist und eine Portnummer dst eines Empfangsknotens 25 beträgt. Ferner wird festgelegt, dass die empfangene Signalstärke RSS in einer entsprechend festgelegten Einheit größer bzw. gleich 10 ist und das Signal-Rausch-Verhältnis SNR wiederum in einer entsprechend festgelegten Einheit kleiner 5 ist. Gemäß dieser, mit "permit" eingeleiteten Regel werden alle Datenpakete mit der Quell-IP-Adresse 0.0.0.0, der Ziel-IP-Adresse 192.15.14.1, welche ferner das TCP-Protokoll verwenden und eine Quell-Portnummer von größer gleich 1024 sowie eine Ziel-Portnummer von 25 aufweisen, bei der Filterung zugelassen, sofern das weitere Kriterium erfüllt ist, dass die Empfangssignalstärke des Datenpakets größer gleich 10 ist und das Signal-Rausch-Verhältnis des Datenpakets kleiner 5 ist. Die Empfangssignalstärke und das Signal-Rausch-Verhältnis stellen dabei Beispiele von physikalischen Übertragungsparametern im Sinne der Erfindung dar. Die Empfangssignalstärke kann z.B. in dbµ gemessen werden, welches ein logarithmisches Maß in Dezibel gegenüber einem Referenzwert von 1 µV darstellt. Demgegenüber kann das Signal-Rausch-Verhältnis rein in dB gemessen werden. Datenpakete, welche die in der Regel "permit" enthaltenen Kriterien erfüllen, werden zugelassen und z.B. an weitere Netzknoten weitergeleitet.

Der Aufbau der obigen, durch den Befehl "deny" spezifizierten Regel ist analog zu der Regel "permit". Insbesondere enthält die Regel "deny" die Quell-IP-Adresse 0.0.0.0, die Ziel-IP-Adresse 192.15.14.1 sowie das Übertragungsprotokoll TCP, wobei nunmehr im Unterschied zu der mit "permit" eingeleiteten Regel eine feste Quell-Portnummer von 25 vorgegeben ist, wohingegen die Ziel-Portnummer durch den Wertebereich von größer gleich 1024 spezifiziert ist. Ferner werden in der Regel "deny" als weiteres Kriterium die Empfangssignalstärke und kein Signal-Rausch-Verhältnis angegeben. Datenpakete, welche die in der Regel "deny" enthaltenen Kriterien erfüllen, werden dabei durch die erfindungsgemäße Filterung verworfen und nicht weiterverarbeitet.

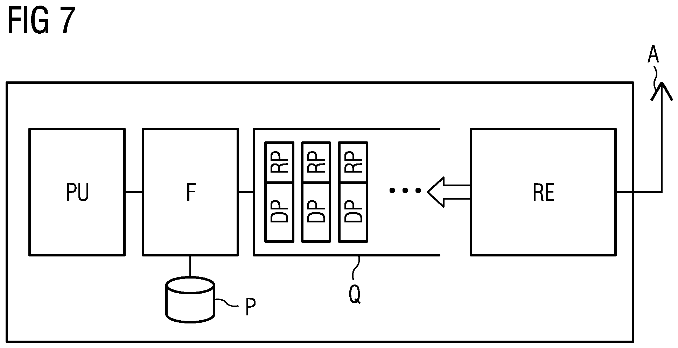

Fig. 7 zeigt in schematischer Darstellung den Aufbau eines Netzknotens in einem drahtlosen Kommunikationsnetz, der die erfindungsgemäße Filter-Funktion beinhaltet. Der Netzknoten umfasst einen Funk-Empfänger RE, der über eine Antenne A drahtlos Datenpakete empfangen kann. Der Funkempfänger demoduliert und decodiert das über die Antenne A empfangene Hochfrequenzsignal, um hieraus die empfangenen Datenpakete DP mit den darin enthaltenen Informationen zu erhalten. Weiterhin ermittelt bzw. misst der Empfänger RE für jedes empfangene Datenpaket physikalische Übertragungsparameter des jeweiligen Datenpakets, welche in Fig. 7 mit RP bezeichnet sind. Die Datenpakete DP bzw. die decodierten Informationen der Datenpakete und die Übertragungsparameter RP werden einander zugeordnet und gemeinsam in einer Warteschlange abgelegt, welche in Fig. 7 mit Q bezeichnet ist. Die Filterung der Datenpakete erfolgt dann in einer entsprechenden Filtereinheit F, welche die Informationen in den Datenpaketen DP sowie die physikalischen Übertragungsparameter RP analysiert und in Abhängigkeit von einem Regelsatz, der in Fig. 7 mit P (P = Policy) angedeutet ist, entscheidet, ob ein jeweiliges Datenpaket einer weiteren Bearbeitungseinheit PU zugeführt wird oder verworfen wird. Je nach Ausgestaltung des Regelsatzes kann in Abhängigkeit von den Informationen in dem Datenpaket und den physikalischen Übertragungsparametern die Bearbeitungseinheit PU die Datenpakete weiterverarbeiten. Beispielsweise können Datenpakete, welche ein erstes Kriterium erfüllen, über eine zweite Netzwerkschnittstelle an weitere Netzknoten weitergeleitet werden. Ebenso können die in dem Datenpaket enthaltenen Informationen und/oder die physikalischen Übertragungsparameter des entsprechenden Datenpakets über eine Benutzerschnittstelle angezeigt werden, falls das Datenpaket ein zweites Kriterium erfüllt.

Im Folgenden wird eine spezielle Variante des erfindungsgemäßen Verfahrens basierend auf einem sog. Inband-Bootstrapping-Vorgang erläutert. Unter Bootstrapping wird die automatische Konfiguration eines Netzknotens in einem Kommunikationsnetz mit Hilfe eines anderen Netzknotens bzw. die gegenseitige Konfiguration von zwei Netzknoten in dem Kommunikationsnetz verstanden. Die Konfiguration umfasst insbesondere das Einrichten einer Kommunikation zwischen den Netzknoten, wobei im Rahmen dieses Vorgangs zum Schutz der späteren Kommunikation in der Regel ein oder mehrere kryptographische Schlüssel ausgetauscht werden. Der Begriff "Inband-Bootstrapping" bedeutet dabei, dass die Schlüssel bzw. kryptographischen Informationen zur Berechnung der Schlüssel über die gleiche Kommunikationsschnittstelle übermittelt werden, die auch nach der Konfiguration zur Übertragung von Daten genutzt wird und dann mit dem oder den kryptographischen Schlüsseln geschützt ist.

Im Rahmen des herkömmlichen Bootstrapping erweist es sich als problematisch, dass die Kommunikation zur Übermittlung der Schlüssel in der Regel nicht oder nur schwach kryptographisch gesichert ist, so dass ein Angreifer unter Umständen die Möglichkeit hat, auf die übertragenen Schlüssel zuzugreifen, so dass er anschließend unbefugt die eingerichtete Kommunikationsschnittstelle benutzen kann bzw. auf dieser Schnittstelle übertragene Daten abhören kann. Herkömmlicherweise wird ein Schutz gegen Angreifer im Rahmen des Bootstrapping-Vorgangs dadurch erreicht, dass der Bootstrapping-Vorgang nur in einem vorbestimmten kurzen Zeitfenster durchgeführt werden kann, beispielsweise nur innerhalb eines Zeitraums nach einem Tastendruck an den entsprechenden Netzknoten, zwischen denen ein Bootstrapping durchgeführt wird. Um die Sicherheit des Bootstrappings weiter zu erhöhen, ist es ferner bekannt, dass das Bootstrapping in einer geschützten, kontrollierten Umgebung durchgeführt wird, bei der bestimmte Angriffe von unbefugten Dritten praktisch als ausgeschlossen angenommen werden können.

Im Rahmen der nachfolgend beschriebenen Ausführungsform kann die Sicherheit des Bootstrappings auf andere Weise und ohne die Verwendung einer geschützten Umgebung erhöht werden. Dies erfolgt dadurch, dass im Rahmen des Bootstrappings nicht nur Informationen innerhalb der beim Bootstrapping übertragenen Datenpakete berücksichtigt werden, sondern auch physikalische Übertragungsparameter dieser Datenpakete. Im Rahmen der hier beschriebenen Ausführungsform des Bootstrappings werden zum Einleiten des Bootstrapping-Vorgangs zunächst erste Bootstrapping-Datenpakete mit hoher Sendeleistung übertragen, welche von den Netzknoten auch mit hoher Signalstärke empfangen werden. Aus den Informationen in den Datenpaketen sowie gegebenenfalls einer Regel, dass die Signalstärke der Datenpakete eine vorgegebene Schwelle überschreiten muss, erkennen dann die Netzknoten in dem Kommunikationsnetz, dass von einem anderen Netzknoten ein Bootstrapping-Vorgang eingeleitet wird. Die Netzknoten unterbinden in diesem Fall die Einleitung eines weiteren Bootstrapping-Vorgangs, um das parallele Ausführen mehrerer Bootstrapping-Vorgänge zu vermeiden, was aufgrund der nicht mehr eindeutigen Zuordnung von Konfigurationsparametern zu einem Abbruch des bereits eingeleiteten Bootstrappings führt.

Nach dem Einleiten des Bootstrappings werden schließlich von einem entsprechenden Netzknoten zweite Bootstrapping-Datenpakete ausgesendet, welche die eigentlichen Konfigurationsdaten und insbesondere auch einen entsprechenden kryptographischen Schlüssel oder einen Parameter zum Berechnen des kryptographischen Schlüssels enthalten. Diese zweiten Datenpakete werden nunmehr mit einer sehr geringen Sendeleistung übertragen, denn die Parameter in diesen Datenpakten sollen nur in einem möglichst kleinen Gebiet bekannt gemacht werden, um hierdurch den Schutz gegen entfernte Angreifer zu erhöhen. In der hier beschriebenen Ausführungsform wird die Signalstärke dieser zweiten Datenpakete herangezogen, um zu überprüfen, dass die zweiten Bootstrapping-Datenpakete auch immer von dem gleichen Netzknoten stammen. Es erfolgt dabei eine Filterung dahingehend, dass nur im Falle, wenn zweite Datenpakete im Rahmen des Bootstrappings immer mit gleichbleibender Signalstärke empfangen werden, das Bootstrapping erfolgreich beendet wird. Sollten gemäß der Filterung Datenpakete erkannt werden, deren Signalstärken sich untereinander stark unterscheiden, wird der Bootstrapping-Vorgang abgebrochen. Gemäß der obigen Ausführungsform wird die Sicherheit des Bootstrappings erhöht, denn ein Angreifer muss die Datenpakete für einen erfolgreichen Angriff derart einschleusen, dass die physikalischen Übertragungsparameter der Datenpakete von dem Empfänger als gültig akzeptiert werden.

In einer weiteren Variante des Bootstrappings können gegebenenfalls auch spezielle Signalstärken der empfangenen zweiten Datenpakete als Kriterium herangezogen werden, dass ein Bootstrapping-Vorgang als gültig akzeptiert wird. Beispielsweise kann im Rahmen eines entsprechenden Regelsatzes festgelegt werden, welche Arten von zweiten Datenpaketen mit hoher und welche Arten von zweiten Datenpaketen mit niedrigerer Signalstärke empfangen werden sollen, wobei die Information, um welche Art von Datenpaket es sich handelt, in dem Datenpaket enthalten ist. Gemäß dieser Variante kann somit bei einem Bootstrapping-Vorgang, für den ein sendender Netzknoten unterschiedliche Signalleistungen für einzelne Datenpakete verwenden soll, der empfangende Netzknoten verifizieren, ob der sendende Netzknoten das erwartete Signalleistungsverhalten aufweist, welches wiederum über entsprechende Regeln festgelegt ist. Weicht das Signalleistungsverhalten von dem erwarteten Verhalten ab, wird das Bootstrapping abgebrochen, da die Gefahr eines Angriffs eines unbefugten Dritten besteht. Für die oben beschriebenen Ausführungsformen können anstatt der Signalstärke auch andere Parameter zur Verifikation eines Bootstrapping-Vorgangs herangezogen werden, wie z.B. die Richtcharakteristik der empfangenen Datenpakete, Parameter einer an die Übertragungseigenschaften angepassten adaptiven Demodulationseinheit und dergleichen.

In einer speziellen Variante des oben beschriebenen Bootstrappings werden zwei und gegebenenfalls auch mehr als zwei aufeinander folgende Bootstrapping-Datenpakete auf Ähnlichkeit ihrer Übertragungsparameter untersucht. Dabei werden z.B. die physikalischen Übertragungsparameter aller im Bootstrapping empfangener bzw. beobachteter Datenpakete gespeichert. Am Ende des Bootstrapping-Vorgangs werden die gespeicherten Übertragungsparameter analysiert, z.B. wird die maximale prozentuale Abweichung eines Übertragungsparameters von seinem Mittelwert bestimmt. Daraus kann dann ein Vertrauensmaß bzw. Konfidenzmaß abgeleitet werden, welches z.B. in einem Wertebereich zwischen -1 und +1 liegt. Je höher das Konfidenzmaß ist, desto höher ist das Vertrauen in dem Bootstrapping-Vorgang dahingehend, dass der Bootstrapping-Vorgang nicht durch einen Dritten manipuliert ist. Beispielsweise kann im Falle einer maximalen prozentualen Abweichung der Übertragungsparameter der Bootstrapping-Datenpakete von mehr als 50% vom Mittelwert das Konfidenzmaß auf -1 gesetzt werden, wohingegen bei einer maximalen prozentualen Abweichung der Übertragungsparameter der Bootstrapping-Datenpakete von weniger als 5% vom Mittelwert dem Konfidenzmaß der Wert +1 zugeordnet wird. Für alle dazwischen liegenden maximalen prozentualen Abweichungen werden dann die Konfidenzmaße linear Zwischenwerten zwischen -1 und +1 zugeordnet. Das ermittelte Konfidenzmaß kann dann zur Verifikation des Bootstrapping-Vorgangs mit einem Schwellwert verglichen werden, wobei nur bei Überschreiten des Schwellwerts (z.B. 0,7) der Bootstrapping-Vorgang erfolgreich abgeschlossen wird und ansonsten verworfen wird.

In einer weiteren Variante kann das ermittelte Konfidenzmaß einem Benutzer über eine Benutzerschnittstelle angezeigt werden, woraufhin der Benutzer entscheiden kann, ob das Bootstrapping als erfolgreich abgeschlossen behandelt werden soll. Je nach entsprechender Benutzereingabe wird das Bootstrapping dann erfolgreich beendet oder abgebrochen. Das Konfidenzmaß kann dem Benutzer dabei z.B. als entsprechender Zahlenwert oder auf einer Farbverlaufs-Skala von grün über gelb nach rot wiedergegeben werden. Gegebenenfalls kann das ermittelte Konfidenzmaß auch den im Rahmen des Bootstrappings eingerichteten Parametern zugewiesen werden, insbesondere dem eingerichteten kryptographischen Schlüssel. Beispielsweise kann basierend auf dem Konfidenzmaß spezifiziert werden, für welche Aktionen später ein eingerichteter Parameter bzw. kryptographischer Schlüssel verwendbar sein soll. So kann z.B. eine sicherheitskritische Konfigurationsänderung nur dann vorgenommen werden, wenn die entsprechende Anweisung zur Konfigurationsänderung mit einem Schlüssel geschützt ist, für den im Rahmen des Bootstrappings ein Konfidenzmaß von größer 0,9 ermittelt wurde. Demgegenüber kann eine weniger sicherheitskritische Abfrage von Diagnosewerte bereits dann zugelassen werden, wenn sie mit einem Schlüssel geschützt ist, dessen Konfidenzmaß im Rahmen des Bootstrappings größer als 0,3 war.

Mit den oben beschriebenen Varianten des Bootstrappings wird eine Überprüfung dahingehend ermöglicht, ob zumindest die relevanten Bootstrapping-Datenpakete gleichartig übertragen werden. Ein Bootstrapping ist damit nur dann erfolgreich durchlaufen, wenn es unter definierten Umgebungsbedingungen erfolgt ist und nicht plötzliche, unerwartete Änderungen der Übertragungseigenschaften beobachtet werden.

Allgemein kann die erfindungsgemäße Filterung von Datenpaketen auch für nicht sicherheitsbezogene Anwendungen verwendet werden. Beispielsweise kann ein Netzknoten in der Form eines Access Points in einem drahtlosen Netzwerk eine Anmeldenachricht z.B. nur dann akzeptieren, wenn ein Empfangsparameter, wie die Signalstärke, eine Schwelle überschreitet, wohingegen andere Nachrichten, wie z.B. das Abmelden von einem Access Point, ein Handover oder eine Nutzdatenübertragung, auch bei schlechteren Parametern, z.B. geringer Signalstärke, akzeptiert werden. Ähnlich kann beispielsweise eine wenig robuste oder datenintensive Kommunikationsart zwischen Netzknoten nur bei guten physikalischen Übertragungsparametern zugelassen werden. Eine Nutzung einer fehleranfälligen Übertragung kann somit z.B. protokollspezifisch eingeschränkt werden, so dass bei schlechten Übertragungsbedingungen nur noch Basisdienste zugelassen sind. Auch können die Dienste geeignet priorisiert werden und basierend auf ihren Prioritäten unterschieden werden. Beispielsweise können bei einer drahtlosen Industriesteuerung bei schlechten Übertragungseigenschaften der empfangenen Datenpakete nur sicherheitskritische Nachrichten oder echtzeitkritische Daten übertragen werden, welche Daten mit hoher Priorität darstellen. Demgegenüber werden weniger wichtige Diagnosedaten im Rahmen einer Filterung bei schlechten Übertragungseigenschaften verworfen.

## Patentansprüche

1. Verfahren zum Verarbeiten von Daten in einem paketvermittelten drahtlosen Kommunikationsnetz, mit einer Mehrzahl von Netzknoten (N1, N2, ..., N6, FW), zwischen denen Datenpakete (DP) übermittelt werden, bei dem:
- aus einem oder mehreren Datenpaketen (DP), die in einem oder mehreren Netzknoten (N1, N2, ..., N6, FW) empfangen werden, die darin enthaltenen Informationen zumindest teilweise extrahiert werden;
- ein oder mehrere physikalische Übertragungsparameter (RP) des oder der empfangenen Datenpakete (DP) ermittelt werden, wobei das oder die physikalischen Übertragungsparameter (RP) eine oder mehrere Eigenschaften der physikalischen Übertragung des oder der empfangenen Datenpakete (DP) spezifizieren oder davon abhängen;
- das oder die empfangenen Datenpakete (DP) basierend auf einem Regelsatz (P), welcher zumindest einen Teil der extrahierten Informationen und zumindest einen Teil des oder der physikalischen Übertragungsparameter (RP) berücksichtigt, gefiltert werden und in Abhängigkeit von der Filterung weiterverarbeitet werden, wobei die in einem oder mehreren Netzknoten (N1, N2, ..., N6, FW) empfangenen Datenpakete (DP) im Rahmen eines vorbestimmten Konfigurationsvorgangs übermittelte Konfigurations-Datenpakete (DP) umfassen, wobei durch den vorbestimmten Konfigurationsvorgang ein oder mehrere Netzknoten (N1, N2, ..., N6, FW) konfiguriert werden, wobei basierend auf einem oder mehreren ermittelten physikalischen Übertragungsparametern des oder der empfangenen Konfigurations-Datenpakete (DP) ein Konfidenzmaß ermittelt wird, welches die Konfidenz wiedergibt, dass das oder die empfangenen Konfigurations-Datenpakete (DP) zu dem vorbestimmen Konfigurationsvorgang gehören, wobei der Konfigurationsvorgang abgebrochen oder unterbrochen wird, wenn das Konfidenzmaß eine Konfidenz repräsentiert, welche kleiner oder kleiner gleich einer vorgegebenen Mindestkonfidenz ist, wobei ein vorbestimmter Konfigurationsvorgang durch ein oder mehrere erste Konfigurations-Datenpakete (DP) eingeleitet wird, welche mit einer ersten Signalstärke von einem oder mehreren Netzknoten (N1, N2, ..., N6, FW) ausgesendet werden, wobei Netzknoten (N1, N2, ..., N6, FW), welche diese ersten Konfigurations-Datenpakete (DP) empfangen, keinen weiteren Konfigurationsvorgang starten, wobei der vorbestimmte Konfigurationsvorgang mit einem oder mehreren zweiten Konfigurations-Datenpaketen (DP) durchgeführt wird, welche mit einer zweiten Signalstärke von einem oder mehreren Netzknoten (N1, N2, ..., N6, FW) ausgesendet werden, welche niedriger als die erste Signalstärke ist.

2. Verfahren nach Anspruch 1, wobei im vorbestimmten Konfigurationsvorgang kryptographische Informationen ausgetauscht werden.

3. Verfahren nach Anspruch 1 oder 2, bei dem die extrahierten Informationen eine oder mehrere der folgenden Informationen umfassen:
- eine oder mehrere Adressen und/oder Portnummern eines Quell-Netzknotens, von dem das oder die empfangenen Datenpakete (DP) stammen, und/oder eine oder mehrere Adressen und/oder Portnummern eines Ziel-Netzknotens, für den das oder die empfangenen Datenpakete (DP) bestimmt sind;
- ein oder mehrere, für die Übertragung des oder der empfangenen Datenpakete (DP) verwendete Übertragungsprotokolle.

4. Verfahren nach einem der vorhergehenden Ansprüche, bei dem die extrahierten Informationen aus der Schicht 2 und/oder der Schicht 3 und/oder einer höheren Schicht des OSI-Referenzmodells stammen.

5. Verfahren nach einem der vorhergehenden Ansprüche, bei dem das oder die physikalischen Übertragungsparameter (RP) einen oder mehrere der folgenden Parameter umfassen:
- die Signalstärke und/oder das Signal-Rausch-Verhältnis, mit denen das oder die Datenpakete (DP) empfangen werden;
- einen oder mehrere Parameter einer adaptiv an die Übertragung der empfangenen Datenpakete (DP) angepassten Demodulationseinheit, mit der das oder die empfangenen Datenpakete (DP) demoduliert werden, insbesondere einen oder mehrere Parameter einer Demodulationseinheit in einem MIMO- und/oder RAKE-Empfänger;
- das oder die Demodulationsverfahren, welche für das oder die empfangenen Datenpakete (DP) genutzt werden;
- die Richtcharakteristik des oder der empfangenen Datenpakete (DP);
- die Übertragungsgeschwindigkeit des oder der empfangenen Datenpakete (DP);
- ein Fehlermaß, welches die bei der Übertragung des oder der empfangenen Datenpakete (DP) aufgetretenen Fehler spezifiziert.

6. Verfahren nach einem der vorhergehenden Ansprüche, bei dem das oder die empfangenen Datenpakete (DP) in Abhängigkeit von der Filterung auf eine oder mehrere der folgenden Arten weiterverarbeitet werden:
- das oder die empfangenen Datenpakete (DP) werden verworfen;
- das oder die empfangenen Datenpakete (DP) werden an einen oder mehrere Netzknoten (N1, N2, ..., N6, FW) weitergeleitet;
- das oder die empfangenen Datenpakete werden klassifiziert;
- Informationen zu dem oder den empfangenen Datenpaketen (DP) werden einem Benutzer über eine Benutzerschnittstelle ausgegeben.

7. Verfahren nach einem der vorhergehende Ansprüche, bei dem durch die Filterung das oder die empfangenen Datenpakete (DP) in Abhängigkeit von extrahierten Informationen zunächst Kategorien zugeordnet werden und anschließend überprüft wird, ob ein oder mehrere ermittelte physikalische Übertragungsparameter (RP) des oder der empfangenen Datenpakete (DP) ein oder mehrere Referenzkriterien der jeweiligen Kategorie erfüllen, welcher das oder die Datenpakete (DP) zugeordnet sind.

8. Verfahren nach Anspruch 7, bei dem basierend auf dem oder den Referenzkriterien ein Maß der Veränderung von einem oder mehreren physikalischen Übertragungsparametern (RP) für mehrere empfangene Datenpakete (DP) ausgewertet wird, wobei das oder die Referenzkriterien insbesondere dann erfüllt sind, wenn das Maß der Veränderung kleiner oder kleiner gleich einem vorgegebenen Schwellwert ist, wobei das oder die Datenpakete (DP), welche das oder die Referenzkriterien nicht erfüllen, vorzugsweise verworfen werden.

9. Verfahren nach Anspruch 7 oder 8, bei dem das oder die Referenzkriterien fest sind oder an ein oder mehrere ermittelte physikalische Übertragungsparameter (RP) des oder der empfangenen Datenpakete (DP) angepasst sind.

10. Verfahren nach einem der vorhergehenden Ansprüche, bei dem das Verfahren zumindest teilweise in dem oder den Netzknoten (N1, N2, ..., N6, FW) durchgeführt wird, in denen das oder die Datenpakete empfangen werden.

11. Verfahren nach einem der vorhergehenden Ansprüche, bei dem das Verfahren für Datenpakete, welche in mehreren vorbestimmten Netzknoten (N1, N2, ..., N6, FW) empfangen werden, zumindest teilweise in einem zentralen Netzknoten ausgeführt wird, der den mehreren vorbestimmten Netzknoten (N1, N2, ..., N6, FW) zugeordnet ist.

12. Verfahren nach einem der vorhergehenden Ansprüche, bei dem das Konfidenzmaß eine umso höhere Konfidenz repräsentiert, je geringer die Veränderung des einen oder der mehreren ermittelten physikalischen Übertragungsparameter für mehrere empfangene Datenpakete (DP) ist.

13. Verfahren nach einem der vorhergehenden Ansprüche, bei dem im Falle der Unterbrechung eines Konfigurationsvorgangs einem Benutzer das Konfidenzmaß über eine Benutzerschnittstelle ausgegeben wird, wobei der Benutzer die Fortsetzung oder den Abbruch des Konfigurationsvorgangs über die Benutzerschnittstelle spezifizieren kann.

14. Verfahren nach einem der vorhergehenden Ansprüche, bei dem das oder die empfangenen Konfigurations-Datenpakete (DP) nur dann dem vorbestimmten Konfigurationsvorgang zugeordnet werden, wenn der eine oder die mehreren ermittelten physikalischen Übertragungsparameter, insbesondere die Signalstärke, des oder der empfangenen Konfigurations-Datenpakete (DP) innerhalb eines oder mehrerer vorbestimmter Wertebereiche liegt.

15. Verfahren nach einem der vorhergehenden Ansprüche, bei dem das Verfahren in einem Kommunikationsnetz einer Automatisierungsanlage eingesetzt wird.

16. Paketvermitteltes drahtloses Kommunikationsnetz, mit einer Mehrzahl von Netzknoten (N1, N2, ..., N6, FW), zwischen denen im Betrieb des Kommunikationsnetzes Datenpakete (DP) übermittelt werden, wobei das Kommunikationsnetz derart ausgestaltet ist, dass in dem Kommunikationsnetz ein Verfahren nach einem der vorhergehenden Ansprüche durchgeführt wird.

17. Netzknoten zur Verwendung in einem drahtlosen Kommunikationsnetz
nach Anspruch 16, umfassend:
- ein erstes Mittel, mit dem im Betrieb des Netzknotens aus einem oder mehreren Datenpaketen (DP), die in einem oder mehreren Netzknoten (N1, N2, ..., N6, FW) des Kommunikationsnetzes empfangen werden, die darin enthaltenen Informationen zumindest teilweise extrahiert werden;
- ein zweites Mittel, mit dem im Betrieb des Netzknotens ein oder mehrere physikalische Übertragungsparameter (RP) des oder der empfangenen Datenpakete (DP) ermittelt werden, wobei das oder die physikalischen Übertragungsparameter (RP) eine oder mehrere Eigenschaften der physikalischen Übertragung des oder der empfangenen Datenpakete (DP) spezifizieren oder davon abhängen;
- ein drittes Mittel, mit dem im Betrieb des Netzknotens das oder die empfangenen Datenpakete basierend auf einem Regelsatz (P), welcher zumindest einen Teil der extrahierten Informationen und zumindest einen Teil des oder der physikalischen Übertragungsparameter (RP) berücksichtigt, gefiltert werden und in Abhängigkeit von der Filterung weiterverarbeitet werden, wobei die im Netzknoten (N1, N2, ..., N6, FW) empfangenen Datenpakete (DP) im Rahmen eines vorbestimmten Konfigurationsvorgangs übermittelte Konfigurations-Datenpakete (DP) umfassen, wobei durch den vorbestimmten Konfigurationsvorgang der Netzknoten (N1, N2, ..., N6, FW) konfiguriert wird, wobei basierend auf einem oder mehreren ermittelten physikalischen Übertragungsparametern des oder der empfangenen Konfigurations-Datenpakete (DP) ein Konfidenzmaß ermittelt wird, welches die Konfidenz wiedergibt, dass das oder die empfangenen Konfigurations-Datenpakete (DP) zu dem vorbestimmen Konfigurationsvorgang gehören, wobei der Konfigurationsvorgang abgebrochen oder unterbrochen wird, wenn das Konfidenzmaß eine Konfidenz repräsentiert, welche kleiner oder kleiner gleich einer vorgegebenen Mindestkonfidenz ist, wobei bei dem ein vorbestimmter Konfigurationsvorgang durch ein oder mehrere erste Konfigurations-Datenpakete (DP) eingeleitet wird, welche mit einer ersten Signalstärke von einem oder mehreren Netzknoten (N1, N2, ..., N6, FW) ausgesendet werden, wobei der Netzknoten (N1, N2, ..., N6, FW) bei Empfang der ersten Konfigurations-Datenpakete (DP) keinen weiteren Konfigurationsvorgang startet, wobei der vorbestimmte Konfigurationsvorgang mit einem oder mehreren zweiten Konfigurations-Datenpaketen (DP) durchgeführt wird, welche mit einer zweiten Signalstärke von einem oder mehreren Netzknoten (N1, N2, ..., N6, FW) ausgesendet werden, welche niedriger als die erste Signalstärke ist.

## Claims

1. Method for processing data in a packet-switched wireless communication network, having a plurality of network nodes (N1, N2, ..., N6, FW) between which data packets (DP) are transmitted, with which method:
- the information contained in one or more data packets (DP) received in one or more network nodes (N1, N2, ..., N6, FW) is at least partially extracted from said packets;
- one or more physical transmission parameters (RP) of the received data packet(s) (DP) are ascertained, wherein the physical transmission parameter(s) (RP) specifies/specify or is/are dependent on one or more characteristics of the physical transmission of the received data packet(s) (DP);
- the received data packet(s) (DP) is/are filtered on the basis of a set of rules (P) that take at least a part of the extracted information and at least a part of the physical transmission parameter(s) (RP) into account and processed further as a function of the filtering process, wherein the data packets (DP) received in one or more network nodes (N1, N2, ..., N6, FW) include configuration-data packets (DP) transmitted within the scope of a predefined configuration process, wherein one or more network nodes (N1, N2, ..., N6, FW) is/are configured through the predefined configuration process, wherein a measure of confidence therein is ascertained on the basis of one or more ascertained physical transmission parameters of the received configuration-data packet(s) (DP), which measure indicates the confidence that the received configuration-data packet(s) (DP) belong(s) to the predefined configuration process, wherein the configuration process is cancelled or interrupted if the measure of confidence represents a degree of confidence that is less than or less than or equal to a predefined minimum confidence, wherein a predefined configuration process is initiated by one or more first configuration-data packets (DP) transmitted having a first signal strength by one or more network nodes (N1, N2, ..., N6, FW), wherein network nodes (N1, N2, ..., N6, FW) that receive said first configuration-data packets (DP) do not launch any further configuration processes, wherein the predefined configuration process is performed using one or more second configuration-data packets (DP) transmitted having a second signal strength less than the first signal strength by one or more network nodes (N1, N2, ..., N6, FW).

2. Method according to claim 1, wherein cryptographic information is exchanged in the predefined configuration process.

3. Method according to claim 1 or 2, in the case of which the extracted information includes one or more of the following items:
- one or more addresses and/or port numbers of a source-network node in which the received data packet(s) (DP) orginate(s) and/or one or more addresses and/or port numbers of a destination-network node for which the received data packet(s) (DP) is/are intended;
- one or more transmission protocols employed for transmitting the received data packet(s) (DP).

4. Method according to one of the preceding claims, in the case of which the extracted information originates in layer 2 and/or layer 3 and/or a higher layer of the OSI reference model.

5. Method according to one of the preceding claims, in the case of which the physical transmission parameter(s) (RP) include(s) one of more of the following parameters:
- the signal strength and/or signal-to-noise ratio with which the data packet(s) (DP) is/are received;
- one or more parameters of a demodulation unit that is adaptively matched to the transmission of the received data packets (DP) and by means of which the received data packet(s) (DP) is/are demodulated, in particular one or more parameters of a demodulation unit in a MIMO and/or RAKE receiver;
- the demodulation method(s) employed for the received data packet(s) (DP);
- the directional characteristic of the received data packet(s) (DP);
- the transmission rate of the received data packet(s) (DP);
- a measure of errors specifying the errors occurring during transmission of the received data packet(s) (DP).

6. Method according to one of the preceding claims, in the case of which the received data packet(s) (DP) is/are, as a function of filtering, processed further in one or more of the following ways:
- the received data packet(s) (DP) is/are rejected;
- the received data packet(s) (DP) is/are forwarded to one or more network nodes (N1, N2, ..., N6, FW);
- the received data packet(s) is/are classified;
- information about the received data packets (DP) is fed out to a user on a user interface.

7. Method according to one of the preceding claims, in the case of which the received data packet(s) (DP) is/are through filtering first assigned to categories as a function of extracted information and then a check is performed to determine whether one or more ascertained physical transmission parameters (RP) of the received data packet(s) (DP) meet one or more reference criteria of the respective category to which the data packet(s) (DP) has/have been assigned.

8. Method according to claim 7, in the case of which a measure of the change in one or more physical transmission parameters (RP) is evaluated for a plurality of received data packets (DP) based on the reference criterion/criteria, wherein the reference criterion/criteria has/have been met in particular if the measure of the change is less than or less than or equal to a predefined threshold, wherein the data packet(s) (DP) not meeting the reference criterion/criteria are preferably rejected.

9. Method according to claim 7 or 8, in the case of which the reference criterion/criteria is/are fixed or have been matched to one or more ascertained physical transmission parameters (RP) of the received data packet(s) (DP).

10. Method according to one of the preceding claims, which method is performed at least partially in the network node(s) (N1, N2, ..., N6, FW) in which the data packet(s) is/are received.

11. Method according to one of the preceding claims, which method, for data packets received in a plurality of predefined network nodes (N1, N2, ..., N6, FW), is performed at least partially in a central network node assigned to the plurality of predefined network nodes (N1, N2, ..., N6, FW).

12. Method according to one of the preceding claims, in the case of which the measure of confidence represents a degree of confidence that is greater the less the change in the one or more ascertained physical transmission parameters is for a plurality of received data packets (DP).

13. Method according to one of the preceding claims, in the case of which the measure of confidence is fed out to a user on a user interface if a configuration process is interrupted, wherein the user is able to specify resuming or cancelling the configuration process via the user interface.

14. Method according to one of the preceding claims, in the case of which the received configuration-data packet(s) (DP) is/are not assigned to the predefined configuration process unless the one or more ascertained physical transmission parameters, in particular the signal strength, of the received configuration-data packet(s) (DP) are within one or more predefined value ranges.

15. Method according to one of the preceding claims which is employed in a communication network of an automation system.

16. Packet-switched wireless communication network, having a plurality of network nodes (N1, N2, ..., N6, FW) between which data packets (DP) are transmitted while the communication network is operating, wherein the communication network is embodied such that a method according to one of the preceding claims is implemented in the communication network.

17. Network node for use in a wireless communication network according to claim 16, including:
- a first means by which the information contained in one or more data packets (DP) received in one or more network nodes (N1, N2, ..., N6, FW) in the communication network is at least partially extracted from said packets while the network node is operating;
- a second means by which one or more physical transmission parameters (RP) of the received data packet(s) (DP) is/are ascertained while the network node is operating, wherein the physical transmission parameter(s) (RP) specifies/specify or is/are dependent on one or more characteristics of the physical transmission of the received data packet(s);
- a third means by which the received data packet(s) is/are filtered on the basis of a set of rules (P) taking account of at least a part of the extracted information and at least a part of the ascertained physical transmission parameters (RP) while the network node is operating and processed further as a function of the filtering process, wherein the data packets (DP) received in the network node (N1, N2, ..., N6, FW) include configuration-data packets (DP) transmitted within the scope of a predefined configuration process, wherein the network node (N1, N2, ..., N6, FW) is configured through the predefined configuration process, wherein a measure of confidence therein is ascertained on the basis of one or more ascertained physical transmission parameters of the received configuration-data packet(s) (DP), which measure indicates the confidence that the received configuration-data packet(s) (DP) belong(s) to the predefined configuration process, wherein the configuration process is cancelled or interrupted if the measure of confidence represents a degree of confidence that is less than or less than or equal to a predefined minimum confidence, wherein a predefined configuration process is initiated by one or more first configuration-data packets (DP) transmitted having a first signal strength by one or more network nodes (N1, N2, ..., N6, FW), wherein the network node (N1, N2, ..., N6, FW) that receives said first configuration-data packets (DP) does not launch any further configuration processes, wherein the predefined configuration process is performed using one or more second configuration-data packets (DP) transmitted having a second signal strength less than the first signal strength by one or more network nodes (N1, N2, ..., N6, FW).

## Revendications

1. Procédé de traitement de données dans un réseau de communication sans fil par paquets, comportant une pluralité de noeuds de réseau (N1, N2, ... , N6, FW) entre lesquels sont transmis des paquets de données (DP), selon lequel :
- les informations contenues dans un ou plusieurs paquets de données (DP) qui sont reçus dans un ou plusieurs noeuds de réseau (N1, N2, ... , N6, FW) en sont extraites au moins en partie ;
- un ou plusieurs paramètres de transmission physiques (RP) du ou des paquets de données reçus (DP) sont déterminés, le ou les paramètres de transmission physiques (RP) spécifiant une ou plusieurs caractéristiques de la transmission physique du ou des paquets de données reçus (DP) ou en dépendant ;
- le ou les paquets de données reçus (DP) sont filtrés sur la base d'une règle (P) qui tient compte d'au moins une partie des informations extraites et d'au moins une partie du ou des paramètres de transmission physiques (RP) et sont ensuite traités en fonction du filtrage, les paquets de données (DP) reçus dans un ou plusieurs noeuds de réseau (N1, N2, ... , N6, FW) incluant des paquets de données de configuration (DP) transmis dans le cadre d'une opération de configuration prédéfinie, un ou plusieurs noeuds de réseau (N1, N2, ... , N6, FW) étant configurés par l'opération de configuration prédéfinie, sur la base d'un ou de plusieurs paramètres de transmission physiques déterminés du ou des paquets de données de configuration reçus (DP) étant déterminée un indice de confiance qui reproduit la confiance en ce que le ou les paquets de données de configuration reçus (DP) font partie de l'opération de configuration prédéfinie, l'opération de configuration étant coupée ou interrompue lorsque l'indice de confiance représente une confiance inférieure ou égale à une confiance minimale donnée, une opération de configuration prédéfinie étant engagée par un ou plusieurs premiers paquets de données de configuration (DP) qui sont émis avec une première intensité de signal par un ou plusieurs noeuds de réseau (N1, N2, ... , N6, FW), des noeuds de réseau (N1, N2, ... , N6, FW) qui reçoivent ces premiers paquets de données de configuration (DP) ne lançant pas d'autre opération de configuration, l'opération de configuration prédéfinie étant exécutée avec un ou plusieurs deuxièmes paquets de données de configuration (DP) qui sont émis par un ou plusieurs noeuds de réseau (N1, N2, ... , N6, FW) avec une deuxième intensité de signal qui est inférieure à la première intensité de signal.

2. Procédé selon la revendication 1, des informations cryptographiques étant échangées dans l'opération de configuration prédéfinie.

3. Procédé selon la revendication 1 ou 2, selon lequel les informations extraites incluent une ou plusieurs des informations suivantes :
- un ou plusieurs adresses et/ou numéros de port d'un noeud de réseau source dont proviennent le ou les paquets de données reçus (DP) et/ou un ou plusieurs adresses et/ou numéros de port d'un noeud de réseau cible auquel sont destinés le ou les paquets de données reçus (DP) ;
- un ou plusieurs protocoles de transmission utilisés pour la transmission du ou des paquets de données reçus (DP).

4. Procédé selon l'une des revendications précédentes, selon lequel les informations extraites proviennent de la couche 2 et/ou de la couche 3 et/ou d'une couche supérieure du modèle de référence OSI.

5. Procédé selon l'une des revendications précédentes, selon lequel le ou les paramètres de transmission physiques (RP) incluent un ou plusieurs des paramètres suivants :
- l'intensité de signal et/ou le rapport signal-bruit avec lesquels le ou les paquets de données (DP) sont reçus ;
- un ou plusieurs paramètres d'une unité de démodulation adaptée à la transmission des paquets de données reçus (DP) et au moyen de laquelle le ou les paquets de données reçus (DP) sont démodulés, en particulier un ou plusieurs paramètres d'une unité de démodulation dans un récepteur MIMO et/ou RAKE ;
- le ou les procédés de démodulation qui sont utilisés pour le ou les paquets de données reçus (DP) ;
- la caractéristique directionnelle du ou des paquets de données reçus (DP) ;
- la vitesse de transmission du ou des paquets de données reçus (DP) ;
- une mesure d'erreur qui spécifie les erreurs qui surviennent lors de la transmission du ou des paquets de données reçus (DP).

6. Procédé selon l'une des revendications précédentes, selon lequel le ou les paquets de données reçus (DP) sont ensuite traités en fonction du filtrage selon une ou plusieurs des manières suivantes :
- le ou les paquets de données reçus (DP) sont rejetés ;
- le ou les paquets de données reçus (DP) sont retransmis à un ou plusieurs noeuds de réseau (N1, N2, ... , N6, FW) ;
- le ou les paquets de données reçus sont classifiés ;
- des informations sur le ou les paquets de données reçus (DP) sont envoyées à un utilisateur via une interface d'utilisateur.

7. Procédé selon l'une des revendications précédentes, selon lequel le filtrage permet tout d'abord d'affecter le ou les paquets de données reçus (DP) à des catégories en fonction d'informations extraites et d'ensuite vérifier si un ou plusieurs paramètres de transmission physiques déterminés (RP) du ou des paquets de données reçus (DP) remplissent un ou plusieurs critères de référence de la catégorie respective à laquelle sont affectés le ou les paquets de données (DP).

8. Procédé selon la revendication 7, selon lequel est évaluée, sur la base du ou des critères de référence, une mesure de la modification d'un ou de plusieurs paramètres de transmission physiques (RP) pour plusieurs paquets de données reçus (DP), le ou les critères de référence étant plus particulièrement remplis lorsque la mesure de la modification est inférieure ou inférieure ou égale à une valeur seuil donnée, le ou les paquets de données (DP) qui ne remplissent pas le ou les critères de référence étant de préférence rejetés.

9. Procédé selon la revendication 7 ou 8, selon lequel le ou les critères de référence sont fermes ou sont adaptés à un ou plusieurs paramètres de transmission physiques déterminés (RP) du ou des paquets de données reçus (DP).

10. Procédé selon l'une des revendications précédentes, selon lequel le procédé est exécuté au moins en partie dans le ou les noeuds de réseau (N1, N2, ... , N6, FW) dans lesquels le ou les paquets de données sont reçus.

11. Procédé selon l'une des revendications précédentes, selon lequel le procédé est exécuté, pour des paquets de données, qui sont reçus dans plusieurs noeuds de réseau prédéfinis (N1, N2, ... , N6, FW), au moins en partie dans un noeud de réseau central qui est affecté aux plusieurs noeuds de réseau prédéfinis (N1, N2, ... , N6, FW).

12. Procédé selon l'une des revendications précédentes, selon lequel l'indice de confiance représente une confiance d'autant plus grande que la modification de l'un ou des plusieurs paramètres de transmission physiques déterminés pour plusieurs paquets de données reçus (DP) est faible.

13. Procédé selon l'une des revendications précédentes, selon lequel, en cas d'interruption d'une opération de configuration, l'indice de confiance est envoyé à un utilisateur via une interface d'utilisateur, l'utilisateur pouvant spécifier la poursuite ou la coupure de l'opération de configuration via l'interface d'utilisateur.

14. Procédé selon l'une des revendications précédentes, selon lequel le ou les paquets de données de configuration reçus (DP) ne sont affectés à l'opération de configuration prédéfinie que si l'un ou les plusieurs paramètres de transmission physiques déterminés, en particulier l'intensité de signal, du ou des paquets de données de configuration reçus (DP) se trouvent dans une ou plusieurs plages de valeurs prédéfinies.

15. Procédé selon l'une des revendications précédentes, selon lequel le procédé est utilisé dans un réseau de communication d'une installation d'automatisation.

16. Réseau de communication sans fil par paquets comportant une pluralité de noeuds de réseau (N1, N2, ... , N6, FW) entre lesquels des paquets de données (DP) sont transmis pendant le fonctionnement du réseau de communication, le réseau de communication étant réalisé de telle sorte qu'un procédé selon l'une des revendications précédentes peut être exécuté dans le réseau de communication.

17. Noeud de réseau destiné à être utilisé dans un réseau de communication sans fil selon la revendication 16, comprenant :
- un premier moyen permettant, pendant le fonctionnement du noeud de réseau, l'extraction au moins partielle, hors d'un ou de plusieurs paquets de données (DP) reçus dans un ou plusieurs noeuds de réseau (N1, N2, ... , N6, FW) du réseau de communication, des informations contenues dedans ;
- un deuxième moyen permettant de déterminer, pendant le fonctionnement du noeud de réseau, un ou plusieurs paramètres de transmission physiques (RP) du ou des paquets de données reçus (DP), le ou les paramètres de transmission physique (RP) spécifiant une ou plusieurs caractéristiques de transmission physique du ou des paquets de données reçus (DP) ou en dépendant ;
- un troisième moyen permettant, pendant le fonctionnement du noeud de réseau, le filtrage du ou des paquets de données reçus sur la base d'une règle (P) qui tient compte d'au moins une partie des informations extraites et d'au moins une partie du ou des paramètres de transmission physiques (RP) et ensuite leur traitement en fonction du filtrage, les paquets de données (DP) reçus dans le noeud de réseau (N1, N2, ... , N6, FW) incluant des paquets de données de configuration (DP) transmis dans le cadre d'une opération de configuration prédéfinie, le noeud de réseau (N1, N2, ... , N6, FW) étant configuré par l'opération de configuration prédéfinie, sur la base d'un ou de plusieurs paramètres de transmission physiques déterminés du ou des paquets de données de configuration reçus (DP) étant déterminé un indice de confiance qui reproduit la confiance en ce que le ou les paquets de données de configuration reçus (DP) font partie de l'opération de configuration prédéfinie, l'opération de configuration étant coupée ou interrompue lorsque l'indice de confiance représente une confiance inférieure ou inférieure ou égale à une confiance minimale donnée, une opération de configuration prédéfinie étant engagée par un ou plusieurs premiers paquets de données de configuration (DP) qui sont émis avec une première intensité de signal par un ou plusieurs noeuds de réseau (N1, N2, ... , N6, FW), le noeud de réseau (N1, N2, ... , N6, FW) ne lançant pas d'autre opération de configuration à la réception des premiers paquets de données de configuration (DP), l'opération de configuration prédéfinie étant exécutée avec un ou plusieurs deuxièmes paquets de données de configuration (DP) qui sont émis par un ou plusieurs noeuds de réseau (N1, N2, ... , N6, FW) avec une deuxième intensité de signal qui est inférieure à la première intensité de signal.
